Europäisches Patentamt

European Patent Office

Office européen des brevets

(19)

(11) Numéro de publication : **0 443 915 A1**

(12) **DEMANDE DE BREVET EUROPEEN**

(21) Numéro de dépôt : **91400368.6**

(22) Date de dépôt : **13.02.91**

(51) Int. Cl.⁵ : **G07C 1/30, G07F 7/08, G06K 19/07**

(30) Priorité : **20.02.90 FR 9002020**

(43) Date de publication de la demande :
**28.08.91 Bulletin 91/35**

(84) Etats contractants désignés :
**AT BE CH DE DK ES GB GR IT LI LU NL SE**

(71) Demandeur : **MATRA COMMUNICATION**
**50, rue du Président Sadate Creac'h Gwenn**
**F-29101 Quimper (FR)**

(72) Inventeur : **Remy, Maurice**
**50 rue du Président Sadate, Creac'h-Gwenn**
**F-29101 Quimper (FR)**

(74) Mandataire : **Fruchard, Guy et al**
**CABINET BOETTCHER 23, rue la Boétie**
**F-75008 Paris (FR)**

(54) **Carte électronique à mémoire, notamment pour le stationnement.**

(57) La carte selon l'invention comporte un dispositif d'affichage (8) d'un état de la mémoire ou d'un état dérivé de celle-ci associé à une unité de traitement (1) contenant une horloge (3), et des moyens (5) pour réaliser une signature variable, par exemple à partir d'un générateur pseudo aléatoire, contrôlée par l'horloge et afficher ses signatures sur le dispositif d'affichage.

EP 0 443 915 A1

Jouve, 18, rue Saint-Denis, 75001 PARIS

## CARTE ELECTRONIQUE A MEMOIRE, NOTAMMENT POUR LE STATIONNEMENT

La présente invention concerne une carte électronique à mémoire, notamment, bien que non exclusivement, pour le contrôle du stationnement.

On utilise de plus en plus des cartes électroniques à mémoire pour différentes applications, en particulier pour mémoriser le solde d'un compte, que ce compte soit exprimé dans une monnaie ou sous d'autres formes d'unités de compte. On envisage actuellement d'utiliser des cartes électroniques à mémoire pour le décompte d'un temps de stationnement. La carte envisagée comporte une unité de traitement comprenant une mémoire initialement chargée avec une certaine somme d'argent, une horloge associée à un organe de décompte afin de décompter dans la mémoire une somme d'argent qui est fonction du tarif de stationnement et du temps de stationnement pendant lequel la carte électronique est mise en service, et un dispositif d'affichage affichant la durée de stationnement autorisée en fonction de l'instant de mise en service de la carte électronique et de la somme restante en mémoire. Chaque fois qu'elle est mise en service, la carte doit être exposée derrière le pare-brise du véhicule en stationnement afin qu'un agent chargé du contrôle du stationnement puisse circuler le long des véhicules en stationnement et vérifier le stationnement autorisé restant pour chacun des véhicules.

Malgré les contraintes envisagées pour décourager les fraudeurs, notamment l'obligation de disposer la carte électronique dans un boîtier ne permettant pas un raccordement à un appareil se substituant à l'unité de traitement, il existe un risque important de fabrication de leurres imitant la carte électronique et son dispositif d'affichage mais contenant un circuit de décompte pouvant être réutilisé indéfiniment par suppression de la partie effectuant le décompte d'argent correspondant au décompte de temps.

Un but de la présente invention est de proposer une carte électronique comportant des moyens permettant de contrôler qu'il s'agit d'une carte électronique authentique et non d'un leurre.

En vue de la réalisation de ce but, on prévoit selon l'invention une carte électronique à mémoire comprenant un dispositif d'affichage d'un état de la mémoire ou d'un état dérivé de celle-ci associé à une unité de traitement contenant une horloge, cette carte comportant en outre des moyens pour réaliser une signature variable contrôlée par l'horloge et afficher cette signature sur le dispositif d'affichage.

Ainsi, la signature évolue constamment dans le temps indépendamment de la mise en service par l'utilisateur de la carte électronique et il est donc possible par comparaison avec une carte de référence, de s'assurer que la signature est conforme et que la carte électronique contrôlée n'est donc pas un leurre.

Selon une version avantageuse de l'invention, la carte électronique comporte des moyens pour réaliser une signature selon un pas différent de l'horloge. Ainsi, par utilisation d'un pas de changement de signature sensiblement plus grand que le pas de l'horloge, on évite de changer trop fréquemment la signature et l'on minimise ainsi le risque d'une observation par un fraudeur du cycle des signatures et de sa simulation sur un leurre.

Selon un autre aspect avantageux de l'invention, la carte électronique comporte des moyens d'affichage d'au moins deux signatures successives. Ainsi, on minimise les risques d'erreurs résultant des imperfections de synchronisme de l'horloge de la carte électronique contrôlée et de la carte électronique de référence.

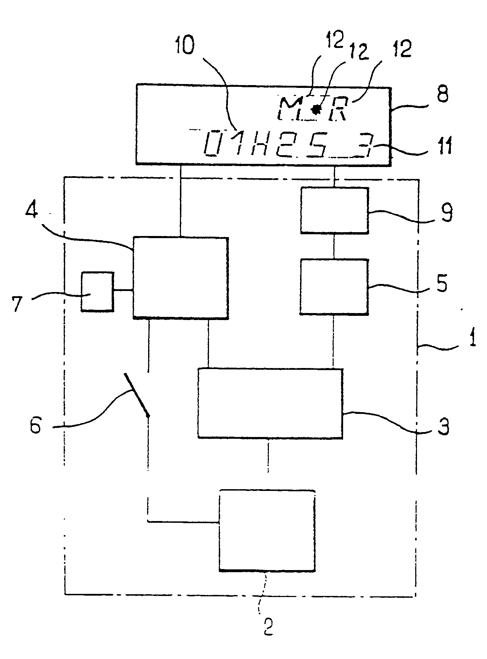

D'autres caractéristiques et avantages de l'invention apparaîtront à la lecture de la description qui suit d'un mode de réalisation particulier non limitatif de l'invention en liaison avec la figure unique ci-jointe qui illustre l'invention de façon schématique.

En référence à la figure, l'invention est décrite en liaison avec une carte de stationnement qui comporte une unité de traitement généralement désignée en 1 comprenant un organe d'alimentation 2 relié à une horloge 3 elle-même associée d'une part à une unité de mémorisation'et de décompte 4 et d'autre part à un organe de réalisation d'une signature 5. L'unité de mémorisation et de décompte 4 est également reliée à un organe de mise en service 6 et un organe de commande de tarif 7. L'unité de mémorisation et de décompte 4 est reliée à un dispositif d'affichage 8. L'organe de réalisation d'une signature 5 est également relié au dispositif d'affichage 8 par l'intermédiaire d'un organe de mémorisation de signature 9.

L'unité de mémorisation et de décompte fonctionne d'une façon connue en soi. Par exemple, l'unité de mémorisation et de décompte 4 comporte une mémoire dans laquelle est introduite une somme initiale qui est progressivement réduite à chaque mise en service proportionnellement au temps de mise en service, qui correspond au temps de stationnement/et en fonction d'un tarif horaire affiché au moyen de l'organe de commande 7. Simultanément, le temps d'autorisation de stationnement 10 est affiché sur le dispositif d'affichage ainsi que le tarif 11 qui apparaît sur le dispositif d'affichage soit sous forme d'une référence soit sous forme d'un taux horaire affiché en clair.

On comprend qu'il serait facile de réaliser un leurre d'une carte électronique ne comportant que l'unité de mémorisation et de décompte en utilisant un dispositif d'affichage identique à celui d'une carte réelle mais en remplaçant le circuit interne par un circuit de décompte simple qui afficherait un temps maximal de stationnement autorisé à chaque mise en service et procéderait ensuite à un décompte de temps qui serait affiché de la même façon que sur une carte électronique authentique.

Pour éviter une fraude de ce genre, le dispositif de réalisation d'une signature 5 selon l'invention fonctionne en permanence sous les impulsions de l'horloge 3, que la carte soit mise en service par l'utilisateur pour afficher un temps de stationnement autorisé ou non. La signature est générée à partir des impulsions de l'horloge, par exemple en utilisant un générateur pseudo aléatoire qui change d'état selon un pas défini par rapport au pas de l'horloge, par exemple toutes les demi-heures ou tous les quart d'heure et qui envoie l'état correspondant à l'organe de mémorisation de signature 9.

Dans le mode de réalisation préféré de l'invention, l'organe de mémorisation de signature 9 mémorise trois signatures successives et comporte des moyens pour afficher le nombre souhaité de signatures 12, par exemple trois signatures dans le mode de réalisation illustré, sur le dispositif d'affichage 8. Les moyens pour afficher les signatures comportent soit des moyens de lecture d'une mémoire générale dans laquelle les signatures sont successivement introduites, soit plus simplement des bascules raccordées au dispositif d'affichage et qui changent d'état lors de chaque pas du générateur de signature. A ce propos on notera que le générateur de signatures est initialisé en usine en fonction de la date et l'heure de sa réalisation afin que tous les générateurs de signature soient dans le même état à un instant donné. Ces signatures sont des caractères alphabétiques ou des signes comme illustré, ou tout autre symbole aisément identifiable et pouvant être affiché à partir de signaux électroniques et d'afficheurs à segments.

Le générateur de signature fonctionnant de façon pseudo aélatoire, de préférence avec une périodicité très grande, il n'est pas possible pour un utilisateur malhonnête d'analyser la séquence des signatures et de reproduire celle-ci au moyen d'un circuit qui ne serait pas soumis au paiement de la taxe de stationnement. Il est donc aisé pour un agent de contrôle muni d'une carte de référence ayant une horloge synchronisée avec l'horloge des cartes de stationnement vendues et possédant un générateur de signature identique, de vérifier que la signature affichée sur le véhicule en stationnement correspond à la signature de sa carte de référence. A ce propos, on notera qu'il peut exister des défauts de synchronisme entre différentes horloges insérées dans les cartes de stationnement et les cartes de référence lors de leur fabrication. A un instant donné qui correspond à un changement de signature, il existera alors une différence entre les signatures affichées, l'une des cartes affichant la signature correspondant à la période de temps antérieure au changement alors que l'autre carte a déjà basculé sur la signature associée à la période de temps suivante en raison d'une légère avance de son horloge. Pour permettre à un agent de contrôle de s'assurer qu'il est effectivement en face d'une carte de stationnement authentique même s'il effectue ce contrôle au moment d'un changement de signature, on prévoit donc de préférence selon l'invention d'afficher, comme représenté, la signature de la période considérée, ici une *, la signature de la période précédente, ici un M, et la signature de la période suivante, ici un R, deux de ces signatures devant alors nécessairement correspondre aux signatures affichées sur la carte de référence détenue par l'agent de contrôle.

Bien entendu, l'invention n'est pas limitée aux modes de réalisation décrits ci-dessus et on peut y apporter des variantes de réalisation sans sortir du cadre de l'invention. En particulier, bien que dans le mode de réalisation préféré envisagé la signature soit réalisée au moyen d'un générateur pseudo aléatoire, on peut réaliser une signature par d'autres moyens, par exemple en mémorisant dans l'organe de réalisation d'une signature une table contenant les différentes signatures et en effectuant une lecture pas à pas de la table sous les impulsions de l'horloge.

Bien que dans le dispositif décrit on ait envisagé d'afficher simultanément le temps de stationnement autorisé, le taux du stationnement et les signatures, on peut également prévoir, afin de réduire les dimensions du dispositif d'affichage, un dispositif permettant un affichage alterné de ces informations.

Bien que la présente invention ait été décrite en liaison avec une carte de stationnement, l'organe de réalisation d'une signature contrôlée par une horloge pourra être utilisé sur toute carte électronique à mémoire pour laquelle on souhaite effectuer une vérification qu'il ne s'agit pas d'un leurre.

Pour augmenter la difficulté pour les fraudeurs de déchiffrer l'algorithme du générateur pseudo aléatoire ou la table des signatures, on peut prévoir de n'afficher la signature que lorsque la carte est en service. Dans ce cas la périodicité du cycle pseudo aléatoire ou du cycle de lecture sera de préférence supérieure à la durée maximum d'utilisation d'une carte.

## Revendications

1. Carte électronique à mémoire comportant un dispositif d'affichage (8) d'un état de la mémoire ou d'un état dérivé de celle-ci associé à une unité de traitement (1) contenant une horloge (3) caractérisée en ce qu'elle comporte des moyens (5) pour réaliser une signature variable contrôlée par l'horloge (3), et afficher cette signature sur le dispositif d'affichage (8).

2. Carte électronique à mémoire selon la revendication 1, caractérisée en ce que les moyens pour réaliser une signature comportent un générateur pseudo-aléatoire.

3. Carte électronique à mémoire selon la revendication 1, caractérisée en ce que les moyens pour réaliser une signature comportent une table associée à des moyens de lecture.

4. Carte électronique à mémoire selon l'une des revendications 1 à 3, caractérisée en ce qu'elle comporte des moyens pour réaliser une signature selon un pas différent de l'horloge (3).

5. Carte électronique à mémoire selon l'une des revendications 1 à 4 caractérisée en ce qu'elle comporte des moyens (9) de mémorisation d'au moins deux signatures successives associés à des moyens de lecture reliés au dispositif d'affichage.

EP 0 443 915 A1

Office européen des brevets

**RAPPORT DE RECHERCHE EUROPEENNE**

Numero de la demande

EP 91 40 0368

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 581 222 (FAGES,J.L.)<br>* page 2,ligne 34 - page 3, ligne 33;<br>page 5, lignes 3-32; figures 1-3 *<br>--- | 1 | G 07 C 1/30<br>G 07 F 7/08<br>G 06 K 19/07 |
| A | EP-A-0 168 836 (OKI ELECTRIC COMPANY)<br>* abrégé; figure 1 *<br>--- | 1 | |
| A | EP-A-0 320 489 (AUTOMATIONS- UND<br>INFORMATIONSSYSTEME -GESELLSCHAFT)<br>* abrégé; figure 3 *<br>--- | 1-3 | |
| A | EP-A-0 176 465 (TOMER, NATAN)<br>* abrégé; figures 1,3 *<br>--- | 1 | |
| A | WO-A-8 802 899 (THOMSON -CSF)<br>* revendication 1; figure 1 *<br>----- | 2 | |

| | | | DOMAINES TECHNIQUES RECHERCHES (Int. Cl.5) |
|---|---|---|---|
| | | | G 06 K 19/00<br>G 07 C 1/00<br>G 07 F 7/00 |

Le présent rapport a été établi pour toutes les revendications

| Lieu de la recherche | Date d'achèvement de la recherche | Examinateur |
|---|---|---|
| BERLIN | 09-05-1991 | DUCREAU F B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

7